(19) **Europäisches Patentamt**
**European Patent Office**
**Office européen des brevets**

(11) **EP 1 961 659 B1**

(12) **FASCICULE DE BREVET EUROPEEN**

(45) Date de publication et mention
de la délivrance du brevet:
**21.04.2010 Bulletin 2010/16**

(51) Int Cl.:
**B64G 1/50** (2006.01)

(21) Numéro de dépôt: **08102023.2**

(22) Date de dépôt: **26.02.2008**

(54) **Dispositif de contrôle thermique embarqué à bord d'un engin spatial**

Vorrichtung zur Wärmeregelung an Bord eines Raumfahrzeuges

Thermal control device on board of a spacecraft

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.02.2007 FR 0753500**

(43) Date de publication de la demande:
**27.08.2008 Bulletin 2008/35**

(73) Titulaire: **THALES**
**92200 Neuilly sur Seine (FR)**

(72) Inventeurs:
• **Hugon, Julien**
  **94117, ARCUEIL Cedex (FR)**
• **Dargent, Thierry**
  **06810, AURIBEAU SUR SIAGNE (FR)**
• **Nann, Isabelle**
  **06150, CANNES LA BOCCA (FR)**
• **de Larminat, Paul**
  **44000 Nantes (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 812 075**

• **SUPPER W: "TWO-PHASE HEAT-TRANSPORT SYSTEMS FOR SPACECRAFT" ESA BULLETIN, ESA SCIENTIFIC AND PUBLICATIONS BRANCH, NOORDWIJK, NL, no. 66, 1 mai 1991 (1991-05-01), pages 64-70, XP000222553 ISSN: 0376-4265**
• **DE PAROLIS M N ET AL: "CURRENT AND FUTURE TECHNIQUES FOR SPACECRAFT THERMAL CONTROL DESIGNDRIVERS AND CURRENT TECHNOLOGIES" ESA BULLETIN, ESA SCIENTIFIC AND PUBLICATIONS BRANCH, NOORDWIJK, NL, no. 87, 1 août 1996 (1996-08-01), pages 73-83, XP000624080 ISSN: 0376-4265**

EP 1 961 659 B1

## Description

L'invention concerne un dispositif de contrôle thermique embarqué à bord d'un satellite ou plus généralement d'un engin spatial.

De manière générale, les satellites comportent une série d'équipements qui, en mode de fonctionnement, génèrent de la chaleur qu'il est nécessaire de rejeter efficacement vers l'espace froid pour que la température de ces équipements reste dans un intervalle de températures nominales. Il est communément proposé d'utiliser des conduits de chaleur appelés caloducs pour transporter la chaleur générée par les équipements de l'engin spatial. Les conduits de chaleur transfèrent de l'énergie thermique vers des radiateurs. Si ces conduits de chaleur forment une boucle fluide, les radiateurs peuvent également être déployés pour ainsi augmenter les surfaces radiatives après la phase de lancement pour assurer le contrôle thermique. Plus précisément et dans un système de contrôle thermique classique, les équipements disposés à l'intérieur des satellites fonctionnent sur des plages de températures telles que la température de rejet de la puissance dissipée vers l'espace via les structures radiateurs est limitée par ces plages. Pour une puissance thermique donnée à évacuer, la surface radiative requise (et donc la masse du contrôle thermique) est donc intimement liée à un niveau de température limitant. Ainsi, pour les missions très énergétiques, le sous-système thermique devient très dimensionnant puisque c'est lui qui impose les dimensions du satellite (surfaces des murs du satellite) à moins que l'utilisation de structures déployables dédiées, encombrantes et lourdes, ne soit envisagée pour augmenter ces surfaces radiatives.

En effet, lorsque la capacité de rejet thermique des murs d'un satellite est dépassée, les solutions connues pour évacuer le surplus de dissipation sont essentiellement l'utilisation de boucles fluides capillaires ou de boucles fluides à pompage mécanique reliant l'intérieur du satellite à des radiateurs déployables dédiés au contrôle thermique. Ces derniers sont lourds et encombrants. Ces solutions et les produits thermiques européens associés nécessitent encore à ce jour (pour la plupart) une phase de qualification en vol. La température de fonctionnement du ou des radiateurs (classiques ou déployables) est nécessairement inférieure à la température maximale acceptable du/des équipement(s) à contrôler, ce qui impacte largement les dimensions requises pour ces radiateurs et donc limite les possibilités pour leur aménagement sur le satellite.

Pour pallier ces problèmes, il est connu du document FR 2 812 075 d'utiliser un système thermique de type machine frigorifique permettant de découpler les équipements que l'on veut contrôler en température, des radiateurs qu'on leur associe, c'est-à-dire que l'on peut augmenter la température du/des radiateurs autant que l'on le souhaite. Les radiateurs ayant un champ de vue direct avec l'espace froid peuvent rayonner à très haute température sans impacter le bon fonctionnement du/des équipement(s), pour ainsi augmenter leur efficacité thermique et permettre une diminution radicale des surfaces radiatives dédiées au contrôle thermique par rapport à un contrôle thermique classique.

Par le biais de moyens de circulation, propose d'abord de prélever la dissipation thermique propre au satellite ou à une partie du satellite (puissance frigorifique) est prélevée à l'aide d'un fluide frigorigène (zone d'évaporation du dispositif) puis la vapeur résultante (on assure aussi ainsi la circulation du fluide) est comprimée et ainsi la température du fluide est élevée. A la sortie de la zone de compression du dispositif, le fluide à l'état gazeux va se condenser au niveau des panneaux radiatifs dédiés (zone condenseur du dispositif) qui évacuent à haute température par rayonnement la puissance totale vers l'espace froid (somme de la puissance frigorifique et de la consommation propre du compresseur). Le fluide est ensuite détendu (zone de détente du dispositif) afin de revenir dans la zone évaporateur avec les propriétés thermodynamiques appropriées.

L'invention se situe au niveau de la zone de condensation qui comporte des moyens permettant d'en faire varier la surface d'échange thermique selon la quantité d'énergie thermique à évacuer vers l'espace.

Pour cela, elle a pour objet un dispositif de contrôle thermique destiné à évacuer la chaleur générée par un groupe d'équipements dissipatifs sur un engin spatial comportant une pluralité de surfaces, et comprenant :

- des moyens de circulation d'un fluide frigorigène ;
- une zone d'évaporation comportant des moyens de circulation du fluide frigorigène;
- une zone de compression ;
- une zone de condensation comportant au moins un panneau radiatif couplé à une partie des moyens de circulation du fluide frigorigène comprenant plusieurs branches et comportant des moyens pour permettre ou interdire la circulation dudit fluide au sein de ces branches de manière à faire varier la surface d'échange thermique dans la zone de condensation ;
- une zone de détente comportant des moyens de circulation du fluide frigorigène.

Selon une variante de l'invention, la zone de condensation est associée à plusieurs panneaux radiatifs. Ces panneaux radiatifs sont composés de plusieurs parties. Les moyens de circulation du fluide frigorigène d'une partie d'un panneau radiatif vers une partie d'un autre panneau radiatif sont montés en série. Idéalement, le nombre n de parties par panneau radiatif est égal au nombre n de panneaux radiatifs, les n panneaux radiatifs étant donc connectés par n-1 moyens de circulation en série, les n parties traversées par le fluide ayant une surface de rejet identique.

Selon une variante de l'invention, les branches sont constituées de conduits présentant des surfaces rainurées.

Selon une variante de l'invention, la zone de condensation comporte au niveau de chaque panneau radiatif un système de vannes automatiques permettant d'utiliser tout ou partie de la surface du panneau radiatif pour évacuer la chaleur, le fluide circulant alors dans tout ou partie desdites branches.

Selon une variante de l'invention, la zone d'évaporation comprend en outre des moyens de chauffage permettant un réchauffage centralisé : on peut ainsi substituer la dissipation thermique du satellite ou du groupe d'équipements concernés par du réchauffage si les équipements dissipent trop peu ou ne dissipent plus. Il faut noter ici l'opportunité de pouvoir faire du réchauffage centralisé, c'est à dire un ensemble de réchauffeurs plus ou moins regroupés et localisés quelque part sur les moyens de circulation du fluide en aval du condenseur et en amont du compresseur. Ces zones de réchauffage ne sont rien d'autre que de nouvelles zones d'évaporation que l'on utilise si besoin. Ceci simplifie amplement le dimensionnement des lignes de réchauffage.

Selon une variante de l'invention, la zone d'évaporation comprend un ou des équipement(s) contrôlés à un seul niveau ou plusieurs niveaux de température différent(s).

Selon une variante de l'invention, la zone de compression comporte plusieurs étages de compression, le nombre d'étages est égal aux nombre de niveaux de température de l'évaporateur à contrôler.

Selon une variante de l'invention, la zone de compression comprend au moins un compresseur centrifuge à paliers magnétiques.

Selon une variante de l'invention, le dispositif comprend un système by-pass entre la zone de compression et la zone de condensation permettant d'ajuster la température du fluide.

L'invention a aussi pour objet un engin spatial comprenant un dispositif de contrôle thermique selon l'invention.

Selon une variante, il s'agit d'un engin spatial de télécommunication présentant des faces communément appelées Nord et Sud , caractérisé en ce qu'il comporte des panneaux radiatifs externes, fixés aux faces Nord et Sud, équipés de la zone de condensation du dispositif de contrôle thermique, lesdits panneaux radiatifs étant découplés conductivement et radiativement de ces faces Nord et Sud.

Selon une variante de l'invention, l'engin spatial comporte des zones d'évaporation, de compression et de détente internes à l'engin spatial.

Avantageusement, il comprend un module de communication et un module de service, les panneaux radiatifs externes étant situés au niveau du module de communication.

Il peut aussi comporter des panneaux radiatifs externes sur la ou les faces communément applées Est, Ouest, Terre, Anti-Terre.

L'invention sera mieux comprise et d'autres avantages apparaîtront à la lecture de la description qui va suivre donnée à titre non limitatif et grâce aux figures annexées parmi lesquelles :

- la figure 1 schématise les différentes zones de condensation, détente, évaporation et compression utilisées dans un dispositif de l'invention ;
- la figure 2 illustre un exemple de dispositif selon l'invention ;
- la figure 3 illustre un exemple d'architecture externe utilisée dans un satellite de télécommunication intégrant un dispositif de l'invention.

De manière générale, le dispositif de contrôle thermique de l'invention comprend différents composants dimensionnés de manière à assumer les diverses contraintes environnementales et les diverses contraintes de fonctionnement du satellite ou des équipements contrôlés.

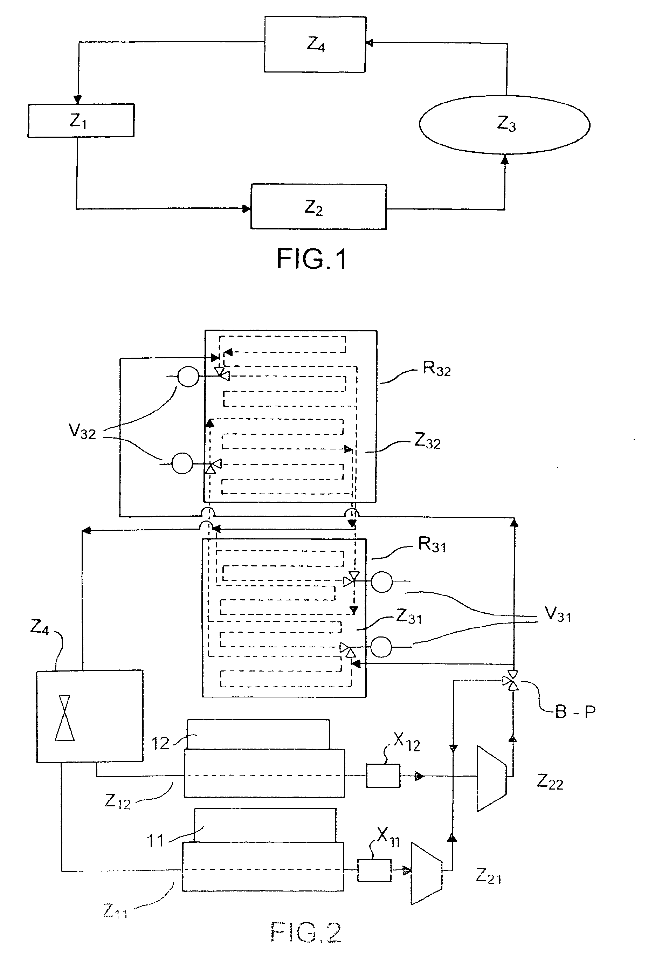

Le dispositif de l'invention est illustré de manière schématique en figure 1. Il comprend une zone d'évaporation $Z_1$, une zone de compression $Z_2$, une zone de condensation $Z_3$ et une zone de détente $Z_4$ , ainsi que des moyens pour faire circuler un fluide frigorigène.

Plus précisément, il consiste d'abord à prélever la dissipation thermique propre au satellite ou à un groupe d'équipements du satellite à l'aide d'un fluide frigorigène (zone d'évaporation $Z_1$ du dispositif) puis à comprimer la vapeur résultante (zone de compression $Z_2$ dans laquelle on assure aussi la circulation du fluide) et élever ainsi la température du fluide. A la sortie de la zone de compression du dispositif, le fluide se condense au niveau de panneaux radiatifs dédiés (zone de condensation $Z_3$ du dispositif) qui évacuent à haute température par rayonnement la puissance totale vers l'espace froid. Ces panneaux sont thermiquement découplés conductivement et radiativement des structures supports des équipements, ce qui permet d'augmenter significativement la température des radiateurs sans impacter la température des équipements du satellite et donc leur bon fonctionnement. Le fluide est ensuite détendu (zone de détente $Z_4$ du dispositif) afin de revenir dans la zone évaporateur avec les propriétés thermodynamiques appropriées.

Le principe est détaillé ci-après. Notons que par un dimensionnement approprié du système, les températures du ou des équipements ainsi que du ou des panneaux radiatifs peuvent être choisies aussi basses ou aussi élevées que l'on désire. S'il est nécessaire de maintenir différentes parties du satellite à des niveaux de température différents, il est avantageux d'utiliser un concept de compression multi étagée permettant notamment d'augmenter le rendement du dispositif. Les radiateurs associés à la zone de condensation peuvent être situés n'importe où à l'extérieur du satellite à partir du moment où ils ne perturbent pas le bon fonctionnement de la mission (champ de vue avec les appendices externes notamment) et où leur interaction avec le sous-système propulsion n'est pas critique (pollution des surfaces radiatives et donc perte d'efficacité de ces dernières au cours de la vie du satellite).

L'utilisation de radiateurs déployables dédiés est néanmoins envisageable même si le concept permet de s'affranchir du besoin de ces derniers.

La possibilité de rejeter la dissipation thermique du satellite à haute température permet également l'utilisation de revêtements non optimisés au niveau des panneaux radiatifs (exemple : peinture blanche). En effet, les flux solaires incidents absorbés par unité de surface peuvent devenir de second ordre devant les flux infrarouges rejetés par les panneaux si la température de rayonnement de ces derniers est correctement choisie. L'utilisation de revêtements de type miroirs n'est alors plus nécessaire. Le coût de fabrication et la masse des radiateurs peuvent être ainsi diminués.

La zone de condensation $Z_3$ comprenant plusieurs branches au niveau des moyens de circulation du fluide frigorigène va être décrite de manière plus détaillée dans un exemple de réalisation. Le type de circulation proposé permet notamment de rendre le système robuste et garantir le contrôle thermique tout au long de la vie du satellite c'est à dire pour des conditions environnementales très variées et des cas de chargement thermique (puissance frigorifique) très variables. Ainsi conçu, le système de l'invention permet d'assurer le contrôle thermique pour un grand nombre de modes de fonctionnement du satellite ou des équipements thermiquement contrôlés (faibles et forts chargements thermiques, environnements pire chaud et pire froid), de la phase de lancement jusqu'en fin de vie. Grâce au dispositif de l'invention, il devient possible de doubler la capacité totale de rejet de chaleur d'un satellite de télécommunication et donc, pour une taille de plate-forme donnée, de pouvoir accepter des missions deux fois plus énergétiques qu'actuellement sans changer nécessairement de gamme de plate-forme.

De manière plus détaillée, la figure 2 met en évidence l'ensemble des différentes zones spécifiques qui donnent au système thermique une grande capacité quant à la prise en charge du contrôle thermique sur la vie du satellite.

1) Zone d'évaporation $Z_1$

Le fluide frigorigène circule au sein de la zone d'évaporation à l'intérieur de tubes ayant des propriétés géométriques moyennes ou locales à dimensionner. Les tubes peuvent avantageusement être rainurés si l'on souhaite augmenter les coefficients d'échanges thermiques (par rapport à une configuration de tubes lisses). Le dimensionnement d'un schéma hydraulique série/parallèle optimal dépend des contraintes systèmes (puissance à transporter, plages de température, aménagement des équipements à contrôler) mais aussi du fluide frigorigène choisi. La figure 2 illustre une configuration avec deux zones d'évaporation $Z_{11}$ et $Z_{12}$ couplées chacune et respectivement à des éléments dissipatifs 11 et 12.

2) Zone de compression $Z_2$

La zone de compression peut avantageusement comprendre plusieurs étages de compression. Le multi-étagement de la zone de compression permet de réguler le satellite ou des groupes d'équipements à des niveaux de température différents ; ces niveaux dépendent entre autre du type d'équipements considérés ou de la zone de satellite concernée. Cette possibilité permet d'optimiser la consommation électrique du compresseur. La figure 2 illustre ainsi le système pour une configuration bi-étagée et comportant deux zones de compression $Z_{21}$ et $Z_{22}$. On peut noter que c'est la zone de compression qui par son action mécanique sur le fluide assure la circulation de ce dernier dans l'ensemble du système.

Dans le cas de satellites de télécommunication, la technologie de compresseur centrifuge à paliers magnétiques peut être retenue (peu de vibrations, aucun besoin de lubrification, peu de frottements, faible consommation électrique, faible encombrement) car elle se marie bien aux contraintes du spatial et notamment à celles en orbite géostationnaire et à la contrainte forte de longue durée de vie.

Par ailleurs, il est intéressant d'utiliser une solution de by-pass radiateurs utilisant un by-pass B-P permettant d'élever la température de la vapeur qui sort du dernier étage de compression de manière à obtenir une température de condensation assez élevée sans trop solliciter le compresseur, et ce afin de pouvoir surmonter des environnements radiateurs chauds. Par un principe de régulation ce by-pass permet de réguler la quantité de fluide sortant du compresseur que l'on ramène en entrée de ce dernier. Cette possibilité est particulièrement intéressante lorsque la puissance frigorifique à transporter doit rester faible ou modérée (contrainte système). Typiquement, pour un satellite de télécommunication en phase de transfert, les générateurs solaires (alors partiellement ou totalement repliés) peuvent voir selon le positionnement dans l'espace du satellite un environnement chaud (flux solaires incidents); si l'on considère un aménagement des radiateurs du satellite fixés parallèlement aux murs Nord/Sud du satellite, et donc situés sous les générateurs solaires lors de la phase de transfert, la solution de by-pass permet au système d'assurer le contrôle thermique des quelques équipements de la charge utile du satellite en fonctionnement et en liaison avec la terre (budget de puissance électrique limité dans cette phase)

3) Zone de condensation $Z_3$

Le fluide frigorigène circule au sein de la zone de condensation des radiateurs à l'intérieur de tubes ayant des propriétés dimensionnelles moyennes ou locales qu'il convient de dimensionner. On pourra par ailleurs les choisir rainurés si l'on souhaite augmenter les coefficients d'échanges thermiques (par rapport à une configuration de tubes lisses). Comme pour la zone évaporation, le schéma hydraulique série/parallèle optimal (et donc le nombre de branches) au sein des radiateurs est dépendant des contraintes systèmes (puissance à transporter, type de structure radiateur choisie....) mais aussi du fluide frigorigène choisi. Au niveau des radiateurs (qui constituent la structure support de la zone de condensation), le schéma hydraulique proposé est spécifique pour deux raisons :

- d'abord le passage de la circulation fluide dans chaque radiateur de l'engin spatial permet de limiter les impacts négatifs d'environnements dissymétriques sur le fonctionnement thermohydraulique du système thermique ; ce système de circulation croisée doit être investigué au mieux au cas par cas ; le choix final (plus ou moins complexe lorsque le nombre de radiateurs augmente) dépend grandement des effets de l'environnement sur le système condenseur. Dans le cas d'un satellite de télécommunication, si l'on s'en réfère au cas de la figure 2 et comportant deux zones de condensation $Z_{31}$ et $Z_{32}$, couplées chacune à un radiateur, respectivement $R_{31}$ et $R_{32}$ (simplifié au cas de 2 radiateurs par commodité), on peut simplement réaliser une circulation sur une moitié d'un radiateur avant de réaliser une circulation dans une moitié de l'autre radiateur (et ceci pour les deux lignes en parallèle) ;

- d'autre part le système de vannes automatiques au niveau de différentes branches du condenseur permet de n'utiliser qu'une partie de la surface de radiateur pour évacuer la dissipation thermique ; ceci permet de maintenir la zone évaporation à un niveau de température minimal acceptable ; d'une manière générale, le couplage d'un environnement thermique moyen froid pour les radiateurs et d'une charge thermique à transporter (puissance frigorifique) décroissante impose la fermeture de vannes situées en entrée de certaines branches de chaque radiateur (symétrie à respecter pour des raisons de stabilité thermohydraulique) afin de condamner la circulation de fluide dans ces dernières.

Dans le cas d'un satellite de télécommunication, si l'on s'en réfère au cas de la figure 2 (simplifié au cas de 2 radiateurs par commodité), il est possible de fermer une ou deux vannes au niveau de chaque radiateur (ensemble $V_{31}$ et ensemble $V_{32}$) de manière à ne disposer que de 75% ou de 50% respectivement de la surface du radiateur pour rejeter la puissance ; ceci permet de maintenir une température de condensation assez haute et donc une température d'évaporation au-dessus de la valeur système à respecter

### 4) Zone de détente $Z_4$

La zone de détente peut inclure des détendeurs de type thermostatique. Les détendeurs constituant cette zone de détente peuvent être agencés en série ou en parallèle vis à vis de la zone d'évaporation s'il existe une compression multi-étagée.

Lorsque la solution de vannes automatiques n'est pas souhaitable ou lorsque la puissance thermique à transporter devient vraiment faible voire nulle au cours d'une phase de vie du satellite, on peut substituer la dissipation thermique du satellite ou du groupe d'équipements concernés par du réchauffage. Il faut noter ici l'opportunité de pouvoir faire du réchauffage centralisé, c'est à dire un ensemble de réchauffeurs plus ou moins regroupés et localisés quelque part sur le tubing en aval du condenseur et en amont du compresseur. Ces zones de réchauffage $X_{11}$ et $X_{12}$ référencées en figure 2, ne sont rien d'autre que de nouvelles zones d'évaporation que l'on utilise si besoin selon un principe de régulation.

Les avantages de cette solution sont multiples et notamment dans le cas d'une plate-forme de télécommunication de dimensions données :

- une augmentation de la capacité de rejet de ses murs en terme de puissance rayonnable vers l'espace pour une gamme de températures de charge utile donnée (missions très dissipatives envisageables pour des plates-formes de dimensions modérées) ;
- une suppression du besoin en radiateurs déployables et donc limitation de l'encombrement et de la masse supplémentaire générés par le contrôle thermique;
- un rayonnement autour de 100°C au niveau des panneaux Nord et Sud permettant de doubler la puissance thermique pouvant être évacuée par les murs de la plate-forme par rapport à aujourd'hui ;
- la possibilité d'utilisation des murs Est, Ouest, voire même les murs Terre (s'il ne présente pas de module d'antennes) et Anti-Terre en cas de charge utile extrêmement dissipative.
- l'augmentation de la puissance de la charge utile par kg de satellite.

Le dispositif de l'invention, grâce à la modularité des différentes zones fonctionnelles permet également de traiter le problème du rapport

$$\frac{puissance\_dissipée}{puissance\_consommée}$$ qui a tendance à augmenter au vu des futures missions pour les satellites de télécommunication et offre des possibilités de régulation du compresseur et du nombre de lignes de condenseur actives ; ceci permet de fonctionner en conductance variable et de diminuer grandement le besoin et le dimensionnement des lignes de réchauffage. Il permet de contrôler la charge utile à plusieurs zones de températures (contrainte système) grâce au principe de compression multi-étagée pour minimiser la consommation électrique nécessaire pour la compression.

Nous allons décrire ci-après l'intégration du dispositif de l'invention sur un satellite de télécommunication. En effet, le dispositif de l'invention peut notamment être utilisé de manière très avantageuse pour le contrôle thermique d'une charge utile de télécommunication. Actuellement, la dissipation thermique de ces charges utiles est évacuée vers l'espace via les panneaux supports Nord et Sud des équipements qui servent donc aussi de radiateurs sur leur face externe. Avec ce système de contrôle thermique, il devient possible d'évacuer la chaleur de la charge utile en utilisant des plaques radiatives fixées à l'extérieur, au niveau des panneaux Nord et Sud, parallèles et découplées conductivement et radiativement au mieux de ces derniers. La surface externe des murs Nord et Sud n'est alors plus utilisée à des fins radiatives mais est recouverte de revêtement isolant pour préserver les équipements internes des hauts niveaux de température des radiateurs.

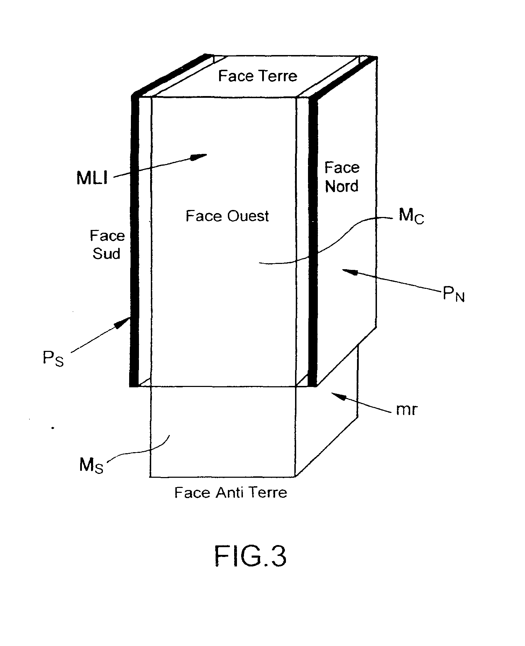

Avec une telle solution, un aménagement optimal des équipements à l'intérieur du module de communication (avec ou sans utilisation d'étagères internes supplémentaires) couplé à un choix adapté de générateurs solaires permet d'optimiser les dimensions des satellites de télécommunication, c'est à dire de les rendre plus denses (impact lanceur fort). La figure 3 illustre schématiquement l'architecture externe de radiateurs telle que proposée pour cet exemple de solution de contrôle thermique pour satellites de télécommunication. Des plaques radiatives $P_N$ et $P_S$ sont fixées extérieurement aux faces Nord et Sud du satellite, parallèles à ces dernières. Ces plaques radiatives sont découplées conductivement et radiativement au mieux du satellite et comportent la zone de condensation du dispositif de rejet de dissipation thermique. Les faces Nord, Sud, Est, Ouest du module de communication du satellite Mc est recouvertes d'un revêtement multi-couches classique communément appelé « MLI » et référencé MLI (Multi-Layer Insulation), contrairement aux structures de l'art antérieur qui nécessitent de revêtir les faces Nord et Sud de revêtement de type miroir. Ces plaques radiatives sont positionnées en regard des faces Nord et Sud au niveau du module de communication du satellite, là où les problématiques de thermique sont les plus importants. Au niveau du module de service, les solutions classiques de contrôle thermique à base de caloducs et de revêtements miroir pour les radiateurs $m_r$ (au niveau des faces Nord et Sud) peuvent être encore utilisées puisque les problèmes thermiques sont moins dimensionnants. L'invention est néanmoins extensible au module de service Ms si nécessaire.

## Revendications

1. Dispositif de contrôle thermique destiné à évacuer la chaleur générée par un groupe d'équipements dissipatifs sur un engin spatial comportant une pluralité de surfaces et comprenant :

   - des moyens de circulation d'un fluide frigorigène ;
   - une zone d'évaporation (Z1) comportant des moyens de circulation du fluide frigorigène ;
   - une zone de compression (Z2);
   - une zone de condensation (Z3) ;
   - une zone de détente (Z4) comportant des moyens de circulation du fluide frigorigène ;

   **caractérisé en ce que** la zone de condensation (Z3) comporte au moins un panneau radiatif couplé à une partie des moyens de circulation du fluide frigorigène comprenant plusieurs branches et comportant des moyens pour permettre ou interdire la circulation dudit fluide au sein de ces branches de manière à faire varier la surface d'échange thermique dans la zone de condensation.

2. Dispositif de contrôle thermique selon la revendication 1, **caractérisé en ce que** la zone de condensation est associée à plusieurs panneaux radiatifs composés de plusieurs parties, les moyens de circulation du fluide frigorigène d'une partie d'un panneau radiatif étant montés en série avec les moyens de circulation du fluide frigorigène d'une partie d'un panneau radiatif distinct ou avec la zone de détente.

3. Dispositif de contrôle thermique selon l'une des revendications 1 ou 2, **caractérisé en ce que** le nombre n de parties par panneau radiatif est égal au nombre n de panneaux radiatifs, les n panneaux radiatifs étant connectés par n-1 moyens de circulation en série, les n parties traversées par le fluide frigorigène ayant une surface de rejet identique.

4. Dispositif de contrôle thermique selon l'une des revendications 1 à 3, **caractérisé en ce que** les branches sont constituées de conduits présentant des surfaces internes rainurées.

5. Dispositif de contrôle thermique selon l'une des revendications 1 à 4, **caractérisé en ce que** la zone de condensation comporte au niveau de chaque panneau radiatif un système de vannes automatiques permettant d'utiliser tout ou partie de la surface du panneau radiatif pour évacuer la chaleur.

6. Dispositif de contrôle thermique selon l'une des revendications 1 à 5, **caractérisé en ce que** la zone d'évaporation comprend en outre des moyens de réchauffage centralisé.

7. Dispositif de contrôle thermique selon l'une des revendications 1 à 6, **caractérisé en ce que** la zone d'évaporation comprend un ou des équipement(s) contrôlés à un seul niveau ou plusieurs niveaux de température différent(s).

8. Dispositif de contrôle thermique selon l'une des revendications 1 à 7, **caractérisé en ce que** la zone de compression comporte plusieurs étages de compression, le nombre d'étages étant égal au nombre de niveaux de température de l'évaporateur à contrôler.

9. Dispositif de contrôle thermique selon l'une des revendications 1 à 8, **caractérisé en ce que** la zone de compression comprend au moins un compresseur centrifuge à paliers magnétiques.

10. Dispositif de contrôle thermique selon l'une des revendications 1 à 9, **caractérisé en ce qu'**il comprend un système by-pass entre la zone de compression et la zone de condensation, permettant de relier la sortie de la zone de compression à l'entrée de la zone de compression ou à l'entrée du dernier étage de compression si compression multi-étagée et d'ajuster la température du fluide en sortie de zone de compression.

11. Engin spatial **caractérisé en ce qu'**il comprend un dispositif de contrôle thermique selon l'une des revendications 1 à 10.

12. Engin spatial de télécommunication selon la revendication 11 et présentant des faces communément appelées Nord et Sud, **caractérisé en ce qu'**il comporte des panneaux radiatifs externes, fixés aux faces Nord et Sud, équipés de la zone de condensation du dispositif de contrôle thermique, lesdits panneaux radiatifs étant découplés conductivement et radiativement de ces faces Nord et Sud.

13. Engin spatial de télécommunication selon la revendication 12 **caractérisé en ce qu'**il comporte des zones d'évaporation, de compression et de détente internes à l'engin spatial.

14. Engin spatial de télécommunication selon l'une des revendications 11 à 13, **caractérisé en ce qu'**il comprend un module de communication et un module de service, les panneaux radiatifs externes étant situés au niveau du module de communication.

15. Engin spatial de télécommunication selon l'une des revendications 11 à 14, **caractérisé en ce qu'**il comporte des panneaux radiatifs externes fixés aux panneaux communément appelées Est, Ouest, Terre, Anti-Terre et parallèles à ces derniers.

**Claims**

1. A thermal control device designed to expel the heat generated by a group of heat dissipating devices on a spacecraft including a plurality of surfaces and comprising:

   - refrigerant circulation means;
   - an evaporation zone (Z1) including refrigerant circulation means;
   - a compression zone (Z2);
   - a condensation zone (Z3);
   - a relief zone (Z4) including refrigerant circulation means;

   **characterised in that** the condensation zone (Z3) comprises at least one radiating panel coupled to a part of the refrigerant circulation means comprising several branches and including means for allowing or preventing the circulation of said fluid within these branches in order to vary the thermal exchange surface in the condensation zone.

2. The thermal control device according to claim 1, **characterised in that** the condensation zone is connected to several radiating panels composed of several parts, the refrigerant circulation means of one part of a radiating panel being mounted in series with the refrigerant circulation means of a part of a distinct radiating panel or with the relief zone.

3. The thermal control device according to one of claims 1 to 2, **characterised in that** the number n of parts per radiating panel is equal to the number n of radiating panels, the n radiating panels being connected by n-1 in-series circulation means, wherein the n parts through which the refrigerant flows have an identical discharge surface.

4. The thermal control device according to one of claims 1 to 3, **characterised in that** the branches are comprised of conduits having grooved internal surfaces.

5. The thermal control device according to one of claims 1 to 4, **characterised in that** the condensation zone includes an automatic valve system at each radiating panel allowing all or part of the surface of the radiating panel to be used to expel heat.

6. The thermal control device according to one of claims 1 to 5, **characterised in that** the evaporation zone further comprises centralised heating means.

7. The thermal control device according to one of claims 1 to 6, **characterised in that** the evaporation zone comprises one or more items of equipment controlled at one or more different temperature levels.

8. The thermal control device according to one of claims 1 to 7, **characterised in that** the compression zone includes several compression steps, the number of steps being equal to the number of temperature levels of the evaporator to be controlled.

9. The thermal control device according to one of claims 1 to 8, **characterised in that** the compression zone comprises at least one magnetic bearing turbo compressor.

10. The thermal control device according to one of claims 1 to 10, **characterised in that** it comprises a by-pass system between the compression zone and the condensation zone allowing the outlet of the compression zone to be linked to the inlet of the compression zone or to the inlet of the final compression step, if compression is multistep, and adjustment of the fluid temperature at the compression zone outlet.

11. A spacecraft, **characterised in that** it comprises a thermal control device according to one of claims 1 to 10.

12. The telecommunication spacecraft according to claim 11, having surfaces generally referred to as North and South, **characterised in that** it comprises external radiating panels, mounted on the North and South faces, fitted with the condensation zone of the thermal control device, said radiating panels being conductively and radiatively uncoupled from these North and South faces.

13. The telecommunication spacecraft according to claim 12, **characterised in that** it comprises evaporation, compression and relief zones inside the spacecraft.

14. The telecommunication spacecraft according to one of claims 11 to 13, **characterised in that** it comprises a communication module and a service module, the external radiating panels being located near the communication module.

15. The telecommunication spacecraft according to one of claims 11 to 14, **characterised in that** it comprises external radiating panels mounted on panels generally referred to as East, West, Earth, Anti-Earth and parallel thereto.

**Patentansprüche**

1. Wärmereguliervorrichtung zum Abführen der Hitze, die von einer Gruppe von ableitenden Geräten an einem Raumfahrzeug mit mehreren Oberfläche erzeugt wird, die Folgendes umfasst:

   - Mittel zum Zirkulieren eines Kältemittels;
   - eine Verdunstungszone (Z1), die Mittel zum Zirkulieren des Kältemittels umfasst;
   - eine Kompressionszone (Z2);
   - eine Kondensationszone (Z3);
   - eine Entspannungszone (Z4), die Mittel zum Zirkulieren des Kältemittels umfasst;

**dadurch gekennzeichnet, dass** die Kondensationszone (Z3) wenigstens eine Strahlungsplatte umfasst, die mit einem Teil der Mittel zum Zirkulieren des Kältemittels gekoppelt ist und mehrere Abzweigungen aufweist und Mittel umfasst, um die Zirkulation des Fluids im Innern dieser Abzweigungen zuzulassen oder zu verhindern, um die Wärmeaustauschfläche in der Kondensationszone zu variieren.

2. Wärmereguliervorrichtung nach Anspruch 1, **dadurch gekennzeichnet, dass** die Kondensationszone mit mehreren aus mehreren Teilen bestehenden Strahlungsplatten assoziiert ist, wobei die Mittel zum Zirkulieren des Kältemittels eines Teils einer Strahlungsplatte in Reihe mit den Mitteln zum Zirkulieren des Kältemittels eines Teils einer separaten Strahlungsplatte oder mit der Entspannungszone montiert sind.

3. Wärmereguliervorrichtung nach Anspruch 1 oder 2, **dadurch gekennzeichnet, dass** die Zahl n von Teilen pro Strahlungsplatte gleich der Zahl n von Strahlungsplatten ist, wobei die n Strahlungsplatten durch n-1 Mittel zum Zirkulieren in Reihe verbunden sind, wobei die n von dem Kältemittel durchflossenen Teile eine identische Abgabefläche haben.

4. Wärmereguliervorrichtung nach einem der Ansprüche 1 bis 3, **dadurch gekennzeichnet, dass** die Abzweigungen von Kanälen gebildet werden, die gerillte Innenflächen aufweisen.

5. Wärmereguliervorrichtung nach einem der Ansprüche 1 bis 4, **dadurch gekennzeichnet, dass** die Kondensationszone an jeder Strahlungsplatte ein automatisches Ventilsystem aufweist, mit die Oberfläche der Strahlungsplatte ganz oder teilweise zum Abführen der Hitze verwendet werden kann.

6. Wärmereguliervorrichtung nach einem der Ansprüche 1 bis 5, **dadurch gekennzeichnet, dass** die Verdunstungszone darüber hinaus zentralisierte Erhitzungsmittel umfasst.

7. Wärmereguliervorrichtung nach einem der Ansprüche 1 bis 6, **dadurch gekennzeichnet, dass** die Verdunstungszone ein oder mehrere Geräte umfasst, die auf einem oder auf mehreren verschiedenen Temperaturniveaus reguliert werden.

8. Wärmereguliervorrichtung nach einem der Ansprüche 1 bis 7, **dadurch gekennzeichnet, dass** die Kompressionszone mehrere Kompressionsstufen umfasst, wobei die Zahl der Stufen gleich der Zahl der Temperaturniveaus des zu regulierenden Verdunsters ist.

9. Wärmereguliervorrichtung nach einem der Ansprüche 1 bis 8, **dadurch gekennzeichnet, dass** die Kompressionszone wenigstens einen Magnetlager-Turbokompressor umfasst.

10. Wärmereguliervorrichtung nach einem der Ansprüche 1 bis 9, **dadurch gekennzeichnet, dass** sie ein Bypass-System zwischen der Kompressionszone und der Kondensationszone umfasst, so dass der Ausgang der Kompressionszone mit dem Eingang der Kompressionszone oder mit dem Eingang der letzten Kompressionsstufe verbunden werden kann, bei mehrstufiger Kompression, und die Temperatur des Fluids am Ausgang der Kompressionszone eingestellt werden kann.

11. Raumfahrzeug, **dadurch gekennzeichnet, dass** es eine Wärmereguliervorrichtung nach einem der Ansprüche 1 bis 10 umfasst.

12. Telekommunikationsraumfahrzeug nach Anspruch 11 mit allgemein als Nord und Süd bezeichneten Flächen, **dadurch gekennzeichnet, dass** es externe Strahlungsplatten umfasst, die an den Nord- und Südflächen befestigt sind, ausgestattet mit der Kondensationszone der Wärmereguliervorrichtung, wobei die Strahlungsplatten leitungs- und strahlungsmäßig von den Nord- und Südflächen abgekoppelt sind.

13. Telekommunikationsraumfahrzeug nach Anspruch 12, **dadurch gekennzeichnet, dass** es Verdunstungs-, Kompressions- und Entspannungszonen innerhalb des Raumfahrzeugs umfasst.

14. Telekommunikationsraumfahrzeug nach einem der Ansprüche 11 bis 13, **dadurch gekennzeichnet, dass** es ein Kommunikationsmodul und ein Service-Modul umfasst, wobei sich die externen Strahlungsplatten am Kommunikationsmodul befinden.

15. Telekommunikationsraumfahrzeug nach einem der Ansprüche 11 bis 14, **dadurch gekennzeichnet, dass** es externe Strahlungsplatten umfasst, die an allgemein mit Osten, Westen, Erde, Antierde bezeichneten Platten und parallel zu diesen befestigt sind.

FIG.1

FIG.2

FIG.3

**RÉFÉRENCES CITÉES DANS LA DESCRIPTION**

**Documents brevets cités dans la description**

- FR 2812075